# EUROPEAN PATENT APPLICATION

(11) **EP 2 386 808 A1**
(43) Date of publication of application: **16.11.2011**
(21) Application number: 10729118.9
(22) Date of filing: 07.01.2010
(51) Int. Cl.: F24J 2/54

(54) **SYSTEM COMPRISING MOBILE SOLAR PANELS FOR CONSTRUCTION**

(30) Priority: 12.01.2009 ES 200900067
(71) Applicant: Universidad Politécnica De Madrid, 28040 Madrid (ES)
(72) Inventor: ADELL ARGILÉS, Josep María, E-28040 Madrid (ES); VEGA SÁNCHEZ, Sergio, E-28040 Madrid (ES); BEDOYA FRUTOS, César, E-28040 Madrid (ES); GARCÍA SANTOS, Alfonso, E-28040 Madrid (ES); NEILA GONZÁLEZ, Javier, E-28040 Madrid (ES); KLAINSEK ZIZMOND, Juan Carlos, E-28040 Madrid (ES)
(74) Representative: Carvajal y Urquijo, Isabel
(86) International application number: PCT/ES2010/000004
(87) International publication number: WO 2010/079250

(57) **Abstract**

The invention relates to a system comprising mobile solar panels for constructions, which makes use of the edges of a building in order to position thereon the axes of rotation (4) of the solar panels for the roof (3, 5) or facade (10, 12, 13, 15), regardless of whether said panels are photovoltaic, thermal or hybrid panels, so that they can always be oriented towards the sun independently of the orientation of the building (1) and/or the roof thereof, whereby said panels can have a rectangular, triangular or polyhedral shape. The invention includes an option whereby the panels can rotate alternately about one or more axes, as well as the possibility of two contiguous panels being joined along the axis thereof (4) so that they can rotate about said axis and a further option whereby the back surface of the panels can be ventilated in order to increase the efficiency of the solar collection system and the ventilation of possible voids in the building.

## Description

### Object of the Invention

The objective of this invention is to take maximum advantage of the façade and roof sections in a building with respect to the sun for collecting the energy thereof, either with photovoltaic, thermal or hybrid solar panels.

### Background of the Invention

Buildings traditionally have vertical walls to enclose the inhabitable space and pitched roofs to allow rain water to run off. Roofs usually have several gables oriented with respect to the corresponding façades of the building.

Buildings constructed in tropical climates usually have roofs with pitches of between 30° and 45° to allow rainwater to run off, unlike flat roofs (0°) of buildings in desert areas near the equator (where it hardly ever rains), or in Nordic areas where buildings have a roof pitch of 60° to avoid the accumulation of water in the form of snow.

From this generic geometric configuration which favors rainwater runoff from the roof, the buildings have gables with a certain pitch and different orientations.

When it comes to wanting to use the sunshine that falls on a building in order to take advantage of the solar energy, it is fundamental to bear in mind the orientation of the panels arranged on the building,it being usual to arrange panels on a pitched roof when it faces south, east or west in the northern hemisphere (a northern orientation in the northern hemisphere does not receive any sunshine), or facing north, east or west in the southern hemisphere (a southern orientation in the southern hemisphere does not receive any sunshine).

Evidently in the tropics, a horizontal roof receives the most sunshine and the walls hardly receive any illumination.

As is well known, the way to take the most advantage of the energy from the sun is to arrange the solar panels perpendicular to the rays of the sun that impinge on them, which for any building means that there are planes of the roof or façade that are better oriented than others.

Since any building is "a static building", the possibilities for solar collection of the façades and roof are limited by its immobility.

If the façade and roof planes could move in relation to the sun, the solar collection of the building would be much more effective.

So by taking into consideration the roof of a building, the gable facing north does not receive direct radiation and collects hardly any energy, while the two gables of the same building facing east and west collect less radiation between the two of them than that obtained by a single gable facing south but with the same surface.

With respect to the façades of the building, as they are usually vertical, the solar collection possibilities are less in tropical areas than the aforementioned pitched roofs. However, although some of the sunlight can be taken advantage of in them, it could be substantially increased if said façades were movable.

As the solar panels developed to date are usually based on rectangular geometries because the silicon "wafers" are square and are the basis for the shape of the panels, problems arise from the fact that this square geometry is not favorable for the triangular gables of the roofs (if full advantage is to be taken of the surface), while on the other hand it is for filling façades with a rectangular geometry.

Traditionally, solar panels are of standard sizes and have to be adapted to the geometry of the building, which is an inherent difficulty which ultimately results in panels being secured on roofs or façades of the building as it is impossible to harmonize the architectural modulation with the industrial modulation for manufacturing the panels.

It is concluded from the previous analysis that for buildings constructed in tropical areas, the horizontal plane of the roof panel (0°) is completely useable for solar collection, as the sun's rays usually impinge on it for most of the day, and the use of the façades for the collection of solar energy can be discounted.

On the other hand, in Nordic or austral countries the shape of a roof with a single plane of maximum proportions and pitch (60°) facing south (or north in the southern hemisphere) is the most beneficial for collecting solar energy, while at the same time the vertical plane of the façades is very favorable for collecting solar energy.

With intermediate orientations (from 30° to 45°) in the tropics, which is where the most inhabited countries are located, the variation in the orientation between east, south and west of the solar panels on the roof is of greater interest than the two aforementioned cases, and the possibility of using the façades for solar use is also of great interest.

### Description of the Invention

The invention suggests the new theory that if the sun rotates around a building that always has certain edges (corners, cornices, hips, ridges, etc.), it is the building itself through said edges that takes advantage of the rotating effect of the sun to achieve solar energy collection.

When considering the standard geometry of any building, it could have prismatic proportions, with square or rectangular façades, and a flat roof (square or rectangular), or even a pitched roof with one or more gables with a certain pitch.

Furthermore, the gables of the pitched roof designed for the rainwater to run off into the street are not always facing (or at least not all of them) the south (in the northern hemisphere) or the north (in the southern hemisphere) in order to achieve maximum solar collection in each case. It is even usual for there to be gable roofs facing east and west, leaving a gable wall or triangular façade facing south and north, which would be the most favorable for solar collection in buildings in the northern and southern hemispheres, respectively.

Taking into account the previous facts, today it is not necessary to be limited to the perimeter of the building when the circumstances so dictate and regulations do not prevent it.

Gable roofs, for example, can perfectly have mobile panels on them which, without projecting from the perimeter of the ground plan, can rotate and be oriented from one façade to the other following the path of the sun at all times in order to take full advantage of solar collection.

The invention makes it possible for a roof arranged horizontally on a square or rectangular roof ground plan to stay within its ground plan when rotating on one of its horizontal edges towards any of its sides, and nevertheless be able to collect double the amount of sunlight in accordance with the position of the sun at all times, whether the façades face east-west or north-south.

If the opposite sections of the two gables are further joined together through the axis of connection and rotation of the solar panels arranged thereon, inclined panels capable of oscillating with respect to one another can be generated, keeping the center of gravity on the axis of rotation, economizing the energy necessary for the movement thereof.

This invention therefore differs from traditional solar roofs which, when they rotate (rather than oscillate) on certain axes, project from the surface that they initially occupy on the ground plan during their travel, which does not happen with the present invention.

The same can also be done with façades, allowing the rotation on two planes of contiguous façades by their common vertical edge.

In the case of pitched roofs, the rotation is somewhat more complex as the axis of rotation is neither vertical nor horizontal, but inclined in the direction of the hip, which again does not prevent having triangular roof sections rotating through an axis of rotation arranged on an inclined edge.

As in the previous cases, if the contiguous planes between a hip are joined together through their edge made up of an axis of rotation, the oscillation of both can be achieved if they are joined together, which further economizes the energy necessary for the rotation thereof.

The rotation mechanism necessary for the functioning of this invention, changing a façade or roof panel from one side to another, is no more complex than that of a door for achieving the rotation thereof, thereby being able to track the movement of the sun.

Despite the aforementioned, it is evident that a large panel arranged facing the wind on the corners of the building or those of the roof constitutes an element prone to being blown over by the wind, which obviously has to be avoided using currently existing technology ranging from cables or purlins to hydraulic jacks or props, struts, etc.

As is logical, if the tracking of the sun using the planes of the façade or roof of the building and the safety controls to prevent them from moving because of the wind alone are to be accurately achieved, a computerized solar tracking system is necessary such that the smart system is capable of precisely rotating the façade panels in accordance with the solar orientation.

If the set of two contiguous sections (either on the façade or roof) of the same size are chosen and they are linked together at least during the solar tracking rotation process, the energy will be economized insofar as an oscillation system is used, either through a vertical, horizontal or inclined axis, in accordance with the sections that are articulated together.

It is also possible for certain façade or roof solar panels to have more than one axis of rotation and to change the axis of rotation in accordance with solar orientation needs. Therefore in this case, said sections will have axes of rotation with their corresponding double hinges capable of being articulated together towards one orientation or another, in accordance with that demanded by the rotation software of the roof.

Obviously although these panels made up definitively by solar panels articulate together and rotate about axes arranged on the edges of the building, said axes may be slightly separated from the physical construction in order to let air pass and ventilate the panels through their lower surface.

The ventilation of the lower surface of the solar panels that are articulated together at the edges of the building is very favorable in the case of photovoltaic panels, while on the other hand it is of no interest in thermal panels and in the case of hybrid panels, their intermediate situation allows the advantages of the previous two cases.

In any case, an emergency or zero setting or resting system of the mechanical rotation or oscillation system of the planes of the façade or roof which secure the sections in their closed position whether it is vertical, horizontal or inclined, either on façades, flat roofs or pitched roofs, will be required. To that end there have to be restraining systems based on retainers at the ends opposite the axes of rotation of said panels.

Although the previous approach is conceived for the purpose of optimizing the solar collection of a building, it does not prevent it from also being advantageously applied to, in addition to covering homes or buildings, to car parks, shaded areas, garden areas, etc., given that the technology of the invention can be adapted perfectly to a wide range of applications.

### Description of the Drawings

In order to complete the description being made and for the purpose of helping to better understand the features of the invention, a set of drawings is attached to the present specification as an integral part thereof in which the following has been depicted with an illustrative and non-limiting character:
Figure 1 shows a schematic perspective view of a building with a gable roof facing east and west, and with solar panels on the roof.
Figure 1a shows one of the different positions of the panels of Figure 1 in which one panel is well positioned with respect to the solar orientation, the east, and the other panel is rotating about the axis arranged on the ridge, facing east.
Figure 1b shows one of the different positions of the panels of Figure 1 in which the panels are horizontally arranged, rotating only half of its possible path about the axis arranged on the ridge.
Figure 1c shows one of the different positions of the panels of Figure 1 in which one panel is well positioned with respect to the solar orientation, the west, and the other panel is rotating about the axis arranged on the ridge, facing west.
Figure 2 shows a schematic perspective view of the same building in Figure 1 with a gable roof, this time facing north and south, and with solar panels on the roof.
Figure 2a shows one of the different positions of the panels of Figure 2 in which the panels are horizontally arranged, rotating only half of its possible path about the axis arranged on the ridge when the sun is positioned to the east or to the west.
Figure 2b shows one of the different positions of the panels of Figure 2 in which one panel is well positioned with respect to the solar orientation, the south, and the other panel is rotating about the axis arranged on the ridge, facing south.
Figure 3 shows a schematic perspective view of a building with a square floor plan and a hip roof with solar panels on the roof.
Figure 3a shows one of the different positions of the panels of Figure 3 when the sun is in the east, in which two of the roof panels are rotated about the axes in that direction.
Figure 3b shows one of the different positions of the panels of Figure 3 in which two triangular panels are in an intermediate position that does not correspond with any of the gables of the roof itself for the purpose of collecting maximum sunlight possible in the southeast orientations.
Figure 3c shows one of the different positions of the panels of Figure 3 when the sun is in the south, in which two of the roof panels are rotated about the axes in that direction.
Figure 3d shows one of the different positions of the panels of Figure 3 in which two triangular panels are in an intermediate position that does not correspond with any of the gables of the roof itself for the purpose of collecting maximum sunlight possible in the southwest orientations.
Figure 3e shows one of the different positions of the panels of Figure 3 when the sun is in the west, in which two of the roof panels are rotated about the axes in that direction.
Figure 4 shows a schematic perspective view of a prismatic building where the façades are used to adhere solar panels half the size of each façade thereon.
Figure 4a shows one of the different positions of the panels of Figure 4 with the position of the sun in the east, with its corresponding solar panels rotated about their vertical axes to face east.
Figure 4b shows one of the different positions of the panels of Figure 4 with the position of the sun in the southeast, with its corresponding solar panels rotated about their vertical axes to face southeast.
Figure 4c shows one of the different positions of the panels of Figure 4 with the position of the sun in the south, with its corresponding solar panels rotated about their vertical axes to face south.
Figure 4d shows one of the different positions of the panels of Figure 4 with the position of the sun in the southwest, with its corresponding solar panels rotated about their vertical axes to face southwest.
Figure 4e shows one of the different positions of the panels of Figure 4 with the position of the sun in the west, with its corresponding solar panels rotated about their vertical axes to face west.
Figure 4f shows one of the different positions of the panels of Figure 4 with the position of the sun in the north in which the panels are closed in a nocturnal position, with front and side perspective.
Figure 5 shows a schematic perspective view of a building with a square floor plan and a flat roof and solar panels on the entire façade.
Figure 5a shows one of the different positions of the panels of Figure 5 with the position of the sun in the east, with its corresponding solar panels rotated about their vertical axes to face east.
Figure 5b shows one of the different positions of the panels of Figure 5 with the position of the sun in the southeast, with its corresponding solar panels rotated about their vertical axes to face southeast.
Figure 5c shows one of the different positions of the panels of Figure 5 with the position of the sun in the south, with its corresponding solar panels rotated about their vertical axes to face south.
Figure 5d shows one of the different positions of the panels of Figure 5 with the position of the sun in the southwest, with its corresponding solar panels rotated about their vertical axes to face southwest.
Figure 5e shows one of the different positions of the panels of Figure 5 with the position of the sun in the west, with its corresponding solar panels rotated about their vertical axes to face west.
Figure 5f shows one of the different positions of the panels of Figure 5 with the position of the sun in the north in which the panels are closed in a nocturnal position, with front and side perspective.
Figure 6 shows a schematic perspective view of a building with a square floor plan and solar panels on the façade and roof.
Figure 6a shows one of the different positions of the panels of Figure 6 with the position of the sun in the south, with its corresponding solar panels rotated about their vertical axes to face south.

### Preferred Embodiment of the Invention

As previously stated, the objective of this invention is to offer the option for any building with a square or rectangular floor plan to be able to take maximum advantage of the impinging of the sun's rays on its façades or roof.

To that end the proposed invention resolves the rotation of the planes of the façade walls or of the planes of the roof gables (whether flat or pitched) partially or entirely.

To that end a set of several different drawings have been presented which set out the existing problems and the development of the invention that resolves them.

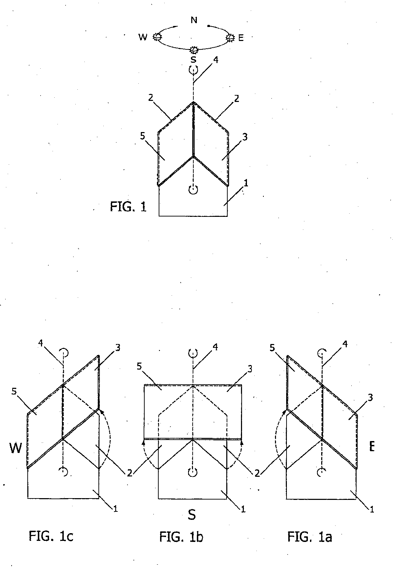

Figure 1 shows a building (1) with a roof with two gables (2) one facing the east and the other the west, as the orientation indicates (the end wall facing south), and on which there are two solar panels (3) and (5), in a resting position on said gables (2), which can rotate about the intermediate axis (4) arranged on the ridge of the building.

This building, and in accordance with the precise orientation, shows three different positions of the deployed panels in the Figures 1a, 1b, 1c.

In Figure 1a it is observed that as the gables of the roof are facing east and west, when the sun is in the east, the panel (3) is well positioned with respect to the solar orientation and the panel (5) rotates about the axis (4) arranged on the ridge, also facing the east, thereby doubling solar collection.

In Figure 1b, and given that the gables (2) of the roof face east and west, the best way to be able to collect solar energy when rotating the solar panels (3) and (5) (which are not facing the south) is by arranging them horizontally, rotating only half their possible path about the axis (4) arranged on the ridge.

In Figure 1c it is observed that as the gables of the roof are facing east and west, when the sun is in the west, the panel (3) is well positioned with respect to the solar orientation and the panel (5) rotates about the axis (4) arranged on the ridge, also facing west, thereby doubling solar collection.

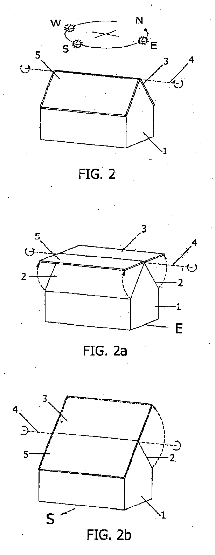

Figure 2 shows the same building (1) as in Figure 1, although in this case with one of the gables of the roof facing south and the other north, with the collapsed solar panels arranged on the gables.

In Figure 2a, and given that the gables (2) of the roof face north and south, the best way to be able to take advantage of the sun when it is in the east or in the west consists of arranging the solar panels (3) and (5) horizontally, performing a half rotation of that possible through the axis (4) arranged on the ridge.

In this case, in Figure 2b, the solar energy use of the building having the façade of one of the gables (2) of the pitched roof facing south benefits doubly from the sunshine by rotating the panel (3) about the axis (4) until it is arranged with the same inclination as the panel (5).

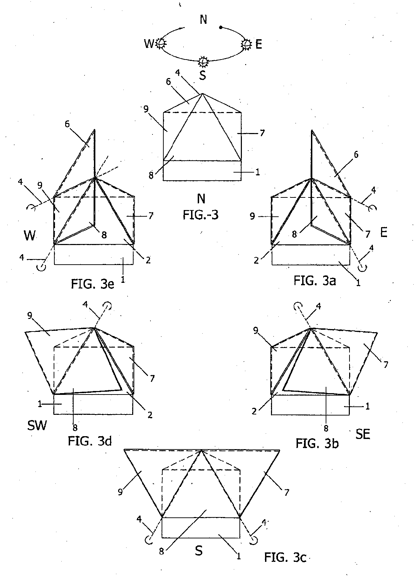

Figure 3 shows the same approach as before but this time applied to a hip roof in which each of the gables is triangular (6) (7) (8) (9) and can rotate to one side (or the other, though alternatively) according to the axes of rotation (4) which in this case follow the pitch of the hips.

In Figure 3a, it is observed that when the sun is in the east, it is of interest to rotate the roof panels (6) and (8) in this direction about the axes (4) until reaching the plane of the panel (7). The same occurs in Figure 3e, in the opposite direction, where the panels (6) (9) (8), are facing west on the same plane. In order to make the panels (6) and (8) change from east to west, they must have a system of hinges that alternatively allow rotation about one of the axes (4) arranged on the hips.

In Figure 3c, the same approach as before is observed, although in this case the triangular solar panels (7) (8) (9) being oriented facing south.

Alternatively in Figures 3b and 3d, the triangular panels (7) (8) and (8) (9), respectively, rotating about the axes (4) are in an intermediate position that does not correspond with any of the gables (2) of the roof itself for the purpose of collecting the maximum sunlight possible in the southeast and southwest orientations, respectively.

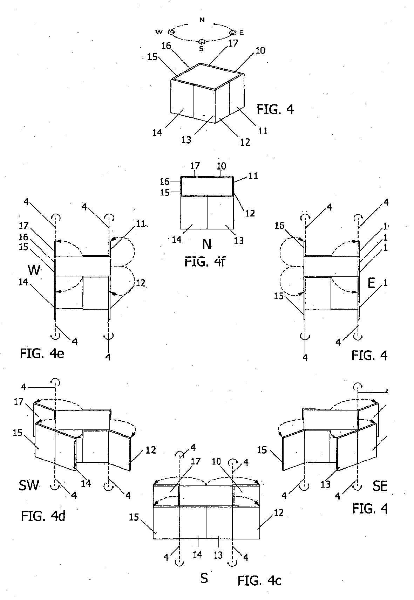

Figure 4 shows a perspective view of a prismatic building where the façades are used to adhere solar panels (10) (11) (12) (13) (14) (15) (16) (17) half the size of each façade thereon.

Figure 4a shows the position of the sun in the east with its corresponding solar panels (10) (13) which have rotated about their vertical axes (4) until being aligned with (11) (12), as well as panels (15) (16) which, in turn, have rotated about their corresponding axes (4) to face the east.

Identically, in Figure 4e, facing west, the panels (17) (14) have rotated until being parallel with the panels (15) (16), as well as panels (11) (12) which, in turn, have rotated about their corresponding axes (4) to face the west.

In Figure 4c, with the sun in the southern position, while the panels (13) (14) remain static, panels (12) (15) would be aligned with them, while the northern panels (10) (17) would also rotate to face south, all about the vertical axes (4).

In Figure 4b which shows an intermediate position between Figures 4a and 4c corresponding with the sun in the southeast, the panels (12) (13) only rotate 45° about their vertical axis (4) until facing southeast, while the panels (10) (15) rotate 135° in order to be able to face the same orientation.

Likewise in Figure 4d, which shows an intermediate position between Figures 4c and 4e corresponding with the sun in the southwest, the panels (14) (15) only rotate 45° about their vertical axis (4) until facing southwest, while the panels (12) (17) rotate 135° in order to be able to face the same orientation.

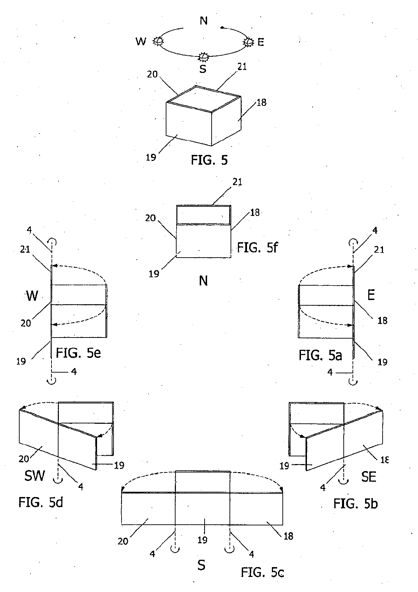

While in Figures 4 the façade panels occupied half the length of the façade, in Figures 5 the panels (18) (19) (20) (21) occupy the entire façade of the building.

Figure 5a shows the position of the sun in the east with its corresponding solar panels (21) (19) which have rotated about their vertical axes (4) until being aligned with (18). Identically, in Figure 5e, facing west, the panels (19) (21) have rotated until being parallel with the panel (20).

In Figure 5c, when the sun is in the south, panels (18) (20) rotate 90° until being parallel with the panel (19).

In Figures 5b and 5d, where the sun is in intermediate positions such as the southeast and southwest, respectively, the panel (19) alternatively rotates to the left and to the right (with a different axis (4) in each figure) to be able to face southeast together with the panel (18), or southwest together with the panel (20), which have also rotated to this orientation.

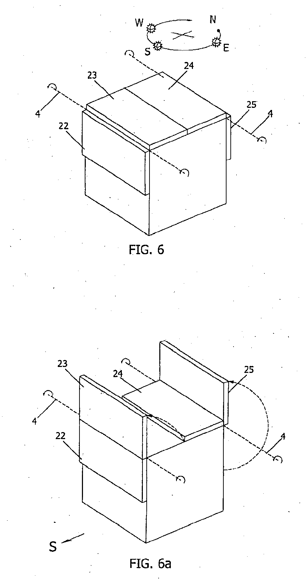

Figure 6 shows one of the several possibilities for arranging panels on the façade (22) (25) and on the roof (23) (24), herein contemplating the horizontal axis of rotation (4) arranged at the level of the cornice.

In Figure 6a, the previous example is developed by arranging the panels facing south, the façade panel (22) and roof panel (24) having remained immobile, and panel (23) having rotated 90° and panel (25) 180°, in order to face the sun in its southern position.

The nocturnal position of the panels of the figures described above corresponds to closed panels, with front and side perspective view, shown in Figures 4f and 5f.

With the previous explanation and the examples shown in the figures with their corresponding sub-sections, the originality of planning buildings with façades and roofs with gables that are mobile along the existing axes at the different bends of the perimeter of a building has been sufficiently demonstrated, whether they are flat or pitched roofs or façades.

This invention can be considered in a more sub-divided manner and by contemplating the architectural composition of each building, where logically the voids on the façade and the proposed rotating corner panels will have to seek a point of agreement, although it must be said that ventilation and vision can be maintained with photovoltaic panels arranged in front of the voids, leaving a ventilation of the lower surface if the panels are slightly separated from the corresponding façade and/or roof.

## Claims

1. A system of mobile solar panels for construction, **characterized in that** the of the building's façade and/or roof solar panels (2) comprise axis of rotation (4) on the edges of the building which allow orienting the solar panels (2) in the direction of the sun to collect maximum solar radiation.

2. The system of mobile solar panels for construction according to claim 1, **characterized in that** the axes of rotation (4) of the solar panels (2) are arranged on the vertical of the corners of the building.

3. The system of mobile solar panels for construction according to claim 1, **characterized in that** the axes of rotation (4) of the solar panels (2) are arranged on the horizontal of the cornices or ridges of the building.

4. The system of mobile solar panels for construction according to claim 1, **characterized in that** the axes of rotation (4) of the solar panels (2) are arranged in an inclined position with respect to the vertical and/or horizontal, corresponding with the hips of the pitched roof.

5. The system of mobile solar panels for construction according to the preceding claims, **characterized in that** the façade and/or roof panels are rectangular, triangular or polyhedron in shape in order to adapt as best as possible to the design of the façade or roof of the building.

6. The system of mobile solar panels for construction according to the preceding claims, **characterized in that** the rotating panels can be mechanically interconnected to one another with fixing systems that achieve their joint and balanced oscillation through the corresponding axis of rotation.

7. The system of mobile solar panels for construction according to the preceding claims, **characterized in that** at least one of the rotating panels has more than one alternative axis of rotation in order to take maximum advantage of the rotation of the panels about the edges of the building.

8. The system of mobile solar panels for construction according to the preceding claims, **characterized in that** the axes arranged on the rotation edges leave a sufficient gap with respect to the actual façade or roof of the building to allow ventilation through their lower surface.

9. The system of mobile solar panels for construction according to the preceding claims, **characterized in that** the solar panels are photovoltaic, thermal or hybrid panels.
